(19) Europäisches Patentamt
European Patent Office
Office européen des brevets

(11) **EP 4 535 687 A1**

(12) **EUROPEAN PATENT APPLICATION**

(43) Date of publication:
**09.04.2025 Bulletin 2025/15**

(21) Application number: **23383009.0**

(22) Date of filing: **02.10.2023**

(51) International Patent Classification (IPC):
**H04B 10/116** $^{(2013.01)}$      **H04B 10/114** $^{(2013.01)}$

(52) Cooperative Patent Classification (CPC):
**H04B 10/116; H04B 10/114**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fundación Imdea Networks**
**28918 Leganés - Madrid (ES)**

(72) Inventors:
• **GIUSTINIANO, Domenico**
  **E-28918 Leganés - Madrid (ES)**
• **GENOVÉS GUZMÁN, Borja**
  **E-28918 Leganés - Madrid (ES)**
• **FROMETA FONSECA, Dayrene**
  **E-28918 Leganés - Madrid (ES)**
• **WIDMER, Jörg Carsten**
  **28918 Leganés - Madrid (ES)**

(74) Representative: **ABG Intellectual Property Law, S.L.**
**Avenida de Burgos, 16D**
**Edificio Euromor**
**28036 Madrid (ES)**

(54) **LIFI ACCESS POINT AND LIFI COMMUNICATION NETWORK COMPRISING THE SAME**

(57)    The present invention refers to a LiFi access point (1) for sending data to at least one LiFi-enabled Internet of Things, IoT, device (6); the LiFi access point (1) comprising: an RF-based wireless unit (1.1) configured to receive at least one RF signal with data from a RF wireless communication network (2); a control unit (1.2) coupled with the RF-based wireless unit (1.1) and a LiFi unit (1.3). The control unit (1.2) comprises a signal demodulator (1.2.1) and a first conversion module (1.2.2). The LiFi unit (1.3) comprises at least one light-emitting diode (1.3.1) and a driver circuit (1.3.2). The invention also refers to a LiFi communication network (4) comprising the LiFi access point (1) and a method for sending data to at least one LiFi-enabled IoT device (6) which is carried out by the LiFi communication network (4).

**FIG. 1A**

EP 4 535 687 A1

**Description**

**TECHNICAL FIELD OF THE INVENTION**

The present invention belongs to the field of communications based on LiFi (Light Fidelity) technology and, more particularly, it discloses a LiFi access point, a LiFi communication network and a method for operating said LiFi access point.

**BACKGROUND OF THE INVENTION**

In the last few years, Optical Wireless Communication (OWC) technologies, and especially Visible Light Communication (VLC), also named Light Fidelity (LiFi) in a networked system, have started to be considered a promising access network solution for Internet of Things (IoT) deployments, including battery-free devices. IoT networks can leverage the unique features of LiFi (i.e., ubiquitous deployment of Light Emitting Diode (LED) sources, simplicity, low cost, and relatively low power) by massively deploying IoT devices that are served by light bulbs installed in the same area.

However, for LiFi to be widely adopted for network access in IoT scenarios, an effective backhaul solution to the existing LiFi network infrastructure is required. Unfortunately, the current backhaul networks for LiFi are typically expensive, lack flexibility for network reconfiguration and/or cannot provide the scalability demanded by certain IoT applications.

Current LiFi deployments for high-speed communications exploit the existing powerlines to connect LiFi Access Points (LiFi APs), to a node or use dedicated infrastructure through Ethernet (i.e., see reference Song et al., "An indoor broadband broadcasting system based on PLC and VLC", IEEE Transactions on Broadcasting, 61, 2 (2015), pp. 299-308) or Optical Fiber (see reference Zhong et al., "Seamless integration of indoor VLC with WDM-PON based on hierarchically modulated constant envelope OFDM", 17th International Conference on Transparent Optical Networks (ICTON), 2015, pp. 1-4). However, PowerLine communication (PLC) devices for LiFi backhauling are expensive and require that the LiFi access points (APs) are in the same powerline network.

On the other hand, dedicated cabling to bring Ethernet or optical fiber to the LiFi APs involves high installation costs, resulting in a significant increase in overall deployment costs. As an alternative, recent works leverage optical wireless technologies such as VLC (as disclosed in Kazemi et al., "A wireless backhaul solution using visible light communication for indoor Li-Fi attocell networks", 2017 IEEE International Conference on Communications, pp. 1-7) or Infrared (IR) (see for instance Kazemi et al., "A wireless optical backhaul solution for optical attocell networks", IEEE Transactions on Wireless Communications 18, 2 (2019), pp. 807-823) for LiFi backhauling. Nevertheless, VLC for backhauling disturbs the uniform illumination claimed by lighting standards, while IR requires manual alignment to guarantee a reliable link with directional transceivers. These are the main limitations which hinder the market size growth of LiFi technology.

An approach could be using WiFi chipsets at both a RF node and each LiFi AP. Throughout this document, an RF node (from now on, just referred to as "node") will be understood as a device able to coordinate transmission slots of IoT devices through the LiFi AP. However, decoding such large bandwidth on the LiFi AP reduces the communication range due to the noise power increase. Besides, it requires great computational complexity and energy consumption, and it takes a long time to convert WiFi to LiFi (i.e., WiFi packets need to be fully decoded and then forwarded via a LiFi link). Finally, Internet of Things (IoT) devices typically require less bandwidth than the one provided by WiFi chipsets.

**BRIEF DESCRIPTION OF THE INVENTION**

To address the aforementioned limitations of LiFi networks, the present application provides a LiFi access point (AP) according to claim 1, a LiFi communication network according to claim 4 and a method for operating with such LiFi APs according to claim 11. Preferred embodiments of the invention are defined in the dependent claims.

The invention makes use of RF technology to provide the backhaul links in said LiFi networks. Specifically, it is described a hybrid Access Point based on LiFi and RF (from now on referred to as LiFi AP), that uses RF links to provide the backhaul network from the node to the LiFi AP and OWC for downlink communicating with IoT devices. In this way, the present invention is able to provide LiFi backhauling in a more scalable way for IoT applications.

A first aspect of the present invention refers to a LiFi AP for sending data to at least one LiFi-enabled IoT device; the LiFi AP comprising an RF-based wireless unit, a LiFi unit and a control unit;

- the RF-based wireless unit being configured to receive at least one RF signal with data from a node; wherein the RF-based wireless unit is also configured to convert said at least one RF signal into a baseband signal;
- the LiFi unit comprising at least one LED configured to emit light, and a driver circuit configured to adapt the intensity of the light emitted by the at least one LED;

- the control unit being communicably coupled with the RF-based wireless unit and with the LiFi unit, the control unit comprising a signal demodulator and a first conversion module;

wherein the control unit is configured for:

- receiving, from the RF-based wireless unit, the baseband signal;
- demodulating, by the signal demodulator, the baseband signal to obtain a demodulated signal;
- converting, by the first conversion module and using a modulation scheme, the demodulated signal into an intensity-modulated digital signal; and
- sending, by the first conversion module, the intensity-modulated digital signal to the driver circuit;

wherein the LiFi unit is configured for:

- adapting, by the driver circuit, the intensity-modulated digital signal to an operating range of the at least one LED, to obtain an intensity-modulated optical signal;
- transmitting, by the at least one LED, the intensity-modulated optical signal to the at least one LiFi-enabled IoT device.

During operation, the LiFi AP receives data from a node and sends such data to one or more LiFi-enabled IoT devices using OWC. In one embodiment, the LiFi-enabled IoT devices are low-power IoT devices and, more preferably, battery-free. In other preferred embodiment, the low-power LiFi-enabled IoT devices comprise one or more solar cells.

Throughout this document, "downlink backhaul" communication/transmission refers to the communication from the node towards the LiFi-enabled IoT device, passing through the LiFi AP.

The LiFi AP receives a RF signal with the data from the node by means of its RF-based wireless unit that, in turn, sends the signal to the control unit.

The signal demodulator demodulates the RF signal and sends it to the first conversion module. The first conversion module in turn converts the demodulated signal into an intensity-modulated digital signal. Said intensity-modulated digital signal can be obtained by using any modulation scheme that results in a real-valued signal.

In this context, the real-valued signal is defined as a signal that carries information only in the amplitude of the signal, without carrying information in the phase of the signal. Examples of modulation schemes that result in a real-valued signal are: on-off keying (OOK), pulse amplitude modulation (PAM), pulse position modulation (PPM), pulse width modulation (PWM), etc. Also, other modulations scheme leading to non-real valued signals (like orthogonal frequency division multiplexing (OFDM)) can be applied if they are subjected to a subsequent conversion into real-valued signals.

The intensity-modulated digital signal is then sent to the driver circuit of the LiFi unit. The driver circuit adapts the intensity-modulated digital signal (a baseband electrical signal) into an intensity-modulated optical signal, therefore it controls either the voltage and/or the current of the light-emitting diode (LED). In this way, thanks to the driver circuit which is installed just before the LED, the latter works in its appropriate operating range. Otherwise, without the use of the driver circuit, the LED would be damaged or the resulting optical signal would be distorted.

The driver circuit adapts the input signal of the LED, but it directly has an effect in the output of the LED as the light power emitted by the LED (output) is substantially proportional to the input of the LED.

Thus, the driver circuit carries out two functions: firstly, it adapts the incoming signal to operate within the LED range; and secondly, it controls the output intensity of the LED, as, for example, the driver circuit manages the DC bias that is responsible to make the output light more or less bright.

Finally, the intensity-modulated optical signal is transmitted to the LiFi-enabled IoT device(s) by the LED.

Advantageously, the proposed LiFi AP implements a low-power, low-complexity, and low-latency direct conversion from RF to OWC. The LiFi AP directly converts the received RF signal to the modulated signal input to the LED. This direct conversion technique significantly reduces the implementation complexity at the LiFi AP by avoiding unnecessary packet processing or buffering, which minimizes the system delay, power consumption, and hardware requirements.

Whilst integrating multiple technologies, the present solution is low cost and has very low complexity, which makes it suitable for dense IoT deployments. To reduce the installation costs and boost the adoption of this system in offices and home environments, the downlink backhaul solution is compatible with well-established technologies, e.g. WiFi, so that any commercial node, as a WiFi router, can properly work in a LiFi communication network comprising the LiFi access point of the present invention.

In the context of this invention, a "node" is understood as a node for communications, which is capable of creating, receiving and/or transmitting information over a communication channel. Throughout the description, the node shall be construed as a RF node having RF communication capabilities. In an embodiment of the invention, the node is, for instance, a conventional WiFi router providing access to Internet from a local network, or a 4G or a 5G base station.

In an embodiment, the driver circuit is a LED driver.

In an embodiment of the LiFi access point, the RF-based wireless unit comprises an RF antenna, an RF front-end and an energy measurement module, wherein:

- the RF antenna is configured to capture the at least one RF signal transmitted by a node and to send the at least one RF signal to the RF front-end;
- the RF front-end comprises the following modules, configured to sequentially process the at least one RF signal:

  ○ a low-noise amplifier (LNA) configured to receive the at least one RF signal, to amplify the at least one RF signal, and to send the RF signal to a mixer;
  ○ a mixer with a local oscillator (LO); the mixer being configured to downconvert to baseband the at least one RF signal by mixing the RF signal with a LO signal;
  ○ at least a filter configured to filter the at least one baseband signal; and
  ○ an Analog-to-Digital converter (ADC), configured to digitize the at least one baseband signal and to send the at least one digitized signal to an energy measurement module;

- the energy measurement module is configured to measure a signal power value from the at least one digitized signal outputted by the RF front-end.

Throughout this document, "RF front-end" will be understood as a set of electrical components that receives a signal and outputs a processed signal. A low-noise amplifier is an electronic component that amplifies a signal while minimizing the noise of the same. A mixer is an electronic component that mixes at least two signals. A local oscillator is an electronic circuit that generates a periodic and oscillating electronic signal (LO signal). A filter is an electronic component that removes unwanted frequency components from the signal.

The digitized signal is the RF signal received in at least one specific resource block of the RF signal. In this way, the RF signal comprises multiple frequency resource blocks, and the LiFi AP, depending on the filter included in the RF front-end, can detect power variations of a specific resource block.

Throughout this document, an "energy measurement module" will be understood as a module that measures the power level (or equivalent metric) of the incoming signal.

In a particular embodiment, the energy measurement module uses the aforementioned hardware (namely, the antenna, LNA, LO, filter and ADC) to take measurements of the received RF signal and stores them in a register.

In this embodiment, the RF-based wireless unit is configured to detect changes in the signal power values (or signal energy values) of the RF signal. For instance, a Received Signal's Strength Indicator (RSSI) of the RF signal received. The changes and the appropriate ranges in RSSI values are noticed by the RF-based wireless unit as it takes measurements of the power of the received RF signals periodically. Once the RF-based wireless unit detects variations in RSSI according to a specific pattern, the control unit begins the demodulation of the RF signal.

In this way, the energy measurement module measures the power of the received signal as a RSSI value. Then, this value is stored in a register. For the demodulation, the stored RSSI value is compared with a threshold in order to demodulate the received signal. For instance, if the RSSI value is lower than the threshold, a first symbol, e.g. '0' is received. Otherwise, if the RSSI value is higher than the threshold, a different symbol, e.g. '1', is received.

In preferred embodiments of the LiFi AP, the at least one RF signal that the RF-based wireless unit is configured to receive comprises:

- an RF preamble;
- a command field preceded by the RF preamble; the command field comprising at least one action to be performed by the LiFi AP;
- a LiFi preamble; and
- a LiFi data field preceded by the LiFi preamble; the LiFi data field comprising data to be transmitted from the LiFi unit to the at least one LiFi-enabled IoT device;

wherein the RF-based wireless unit is further configured to adjust one or more demodulation parameters according to the RF preamble of the at least one RF signal; wherein the signal demodulator is configured to perform the following steps according to the one or more demodulation parameters:

- decoding the command field of the received RF signal;
- checking whether the at least one action of the command field must be executed or not;
- decoding the LiFi preamble and the LiFi data field to obtain the demodulated signal;
- sending the demodulated signal to the first conversion module.

In the context of the present invention, a data frame of RF signal(s) is understood as the data structure comprising the RF preamble field, the command field, the LiFi preamble and the LiFi data field. These data frames can be forwarded in the downlink to LiFi-enabled IoT device(s).If, after checking of the at least one action of the command field performed by the demodulator it is found that one or more actions must be executed, then said actions are performed by the RF-based wireless unit, and/or the control unit, and/or the LiFi unit.

Preferably, in an embodiment of the invention, the command field of the data frame is a short message with instructions to adjust one or more specific parameters (e.g., a demodulation threshold of the ASK receiver, the dimming level according to user requirements, etc.) of the LiFi unit, the control unit, and/or the RF-based wireless unit.

It is worth pointing out that the step of executing the command field is only executed in the event of detecting a command field which requires it. Otherwise, this step is simply skipped.

In an embodiment of the LiFi AP, the signal demodulator is a demodulator that decodes the signal in the amplitude domain (such as an Amplitude-Shift Keying (ASK) demodulator) or in the frequency domain (such as a Frequency-Shift Keying (FSK) demodulator) configured to adjust a demodulation threshold dynamically according to the RF preamble.

Advantageously, in this embodiment involving ASK, the information is encoded in the amplitude of the RF signal. Then, the receiver (demodulator) must establish some thresholds within the range of the received signal power to correctly decode the received signal and decide which symbols have been received.

Alternatively, FSK can be applied, which provides longer range of communication, as the same power can be used on multiple carriers. However, it uses larger bandwidth, and so it can provide fewer number of simultaneous transmissions.

Advantageously, the step of dynamically adjusting or updating the demodulation parameters used during signal demodulation at the LiFi access point allows to increase the system's robustness against external RF interference. Parameters update is executed by the LiFi AP each time a new RF data frame is received. Then, the LiFi AP uses the periodic measurements gathered during RF preamble reception to derive the demodulation parameters (i.e., demodulation threshold when considering ASK). In this way, the LiFi AP adjusts the ASK demodulation threshold dynamically by using the RF preamble sent by the node (e.g., WiFi routers or 4G/5G base stations).

In an embodiment of the LiFi access point, the at least one RF signal comprises a command field with specific actions to be performed by the LiFi AP, and wherein:

- the RF-based wireless unit; and/or
- the control unit; and/or
- the LiFi unit

are configured to carry out the actions of the command field.

In an embodiment of the LiFi access point, the actions of the command field comprise at least one of the following:

- adjusting the dimming level of the intensity-modulated optical signal according to predetermined requirements, and/or
- adjusting the diameter of a LiFi cell created by the LiFi access point.

In the present invention, the dimming level refers to the illumination intensity provided by the LiFi AP. Said dimming level can be adjusted varying the amplitude, duty cycle or bias of the transmitted optical signal, among other options envisaged by a skilled person in the art.

Likewise, a LiFi cell is understood as the coverage area created by the LiFi access point, e.g., a LiFi cell can be a room which is illuminated by the LiFi AP.

In certain embodiments of the LiFi AP, the modulation scheme is digital, preferably an On-Off Keying (OOK) scheme.

Advantageously, this OOK modulation approach allows to maximize the distance between transmitted symbols.

A second aspect of the invention refers to a LiFi communication network comprising:

- at least one LiFi access point according to any of the embodiments of the first aspect of the invention;
- a node;

wherein the node is configured to be communicably coupled with the RF-based wireless unit; and
wherein the node is configured to allocate one or more frequency resource blocks to the at least one LiFi AP.

In a preferred embodiment of the LiFi communication network, the node is a WiFi router or 4G and/or 5G base stations.

In an embodiment of theLiFi communication network, the node is configured to be communicably coupled with the RF-based wireless unit via an RF wireless communication network.

Through the whole document, a frequency resource block will be understood as a frequency channel of the node being defined by a carrier frequency and a channel bandwidth.

As mentioned before, in some embodiments, the node provides Internet access and/or coordinates the transmission slots of the IoT devices through the LiFi APs.

In some embodiments of the LiFi communication network, each LiFi AP in the LiFi communication network is allocated with a specific frequency resource block from the node and connected to it through a dedicated link.

However, it must be noted that the node is not necessarily dedicating all its available resources (i.e., frequency channels) to communicating with the IoT devices. For example, when considering a WiFi router as the node, it can dedicate some time resources to the IoT devices and other time resources to legacy WiFi networks. This resource allocation is managed from the node and may depend on the current network demands and applications.

In an embodiment in which ASK is employed, at least one frequency resource block per LiFi AP is allocated. Alternatively, in an embodiment in which FSK is employed, at least $M$ frequency resource blocks per LiFi AP are allocated (wherein $M$ represents the number of symbols in the FSK modulation, represented by $M$-FSK).

In an embodiment of the LiFi communication network, the node is configured to allocate each of the at least one LiFi AP with a specific frequency resource block for the reception and transmission of RF signals, each frequency resource block being defined by a carrier frequency and a channel bandwidth.

In an embodiment of the LiFi communication network, the node is configured to allocate each of the at least one LiFi APs with its specific frequency resource block following an Orthogonal Frequency Division Multiplexing approach (OFDM) or an Orthogonal Frequency Division Multiple Access (OFDMA) approach.

To provide a scalable and long-range RF-based backhaul solution for LiFi systems, in this embodiment, the present invention exploits the Orthogonal Frequency Division Multiplexing (OFDM) of standard WiFi (IEEE 802.11g/n) to associate individual WiFi subcarriers to different LiFi APs. Thanks to this approach, it is possible to provide as many simultaneous downlink transmissions as WiFi data subcarriers are.

Also, since LiFi APs are listening to a single WiFi subcarrier, the communication range with respect to solutions demodulating the whole WiFi channel is increased. In fact, considering Friis' transmission equation, for a fixed signal-to-noise ratio (SNR) value, the achieved distance is proportional to $1/\sqrt{B}$, where $B$ is the signal bandwidth.

In an embodiment, the node comprises a second conversion module configured to use only specific MAC ("Media Access Control") frames in order to control the amplitude of each subcarrier of the RF signal.

The "resource block" is the terminology typically used in OFDMA (e.g. in 5G). However, the concept of "resource block" is not found often linked to older standards of WiFi with OFDM, as different carriers cannot be associated to different users. The present invention takes this into account by introducing a second conversion module in the node that uses only specific MAC frames that allow to change the amplitude of specific subcarriers. In this way, the second conversion module provides control of the amplitude at each subcarrier of the RF signal. For this purpose, the node can be reverse engineered by introducing the second conversion module, suitable for communicating with the LiFi AP.

Therefore, the second conversion module comprises a look-up table that allows to conform the WiFi frames so that the desired N-QAM symbols can be transmitted at each subcarrier of the RF signal.

The specific MAC frames, which are required for conforming the WiFi frames, are included in a look-up table that is created beforehand for all the possible N-QAM symbol combinations carried at each subcarrier. These frames are arranged such that, when injected as payload of the WiFi MAC frame (or simply MAC frame) of the WiFi frames, the signals transmitted over the air are exactly the N-QAM symbols selected. Advantageously, this allows to control the amplitude of each subcarrier. From now on, "payload" would be interpreted as the payload of the MAC frame.

As a side note, a WiFi MAC frame (or simply MAC frame) comprises a MAC header and a payload. On the other hand, the WiFi frame comprises a preamble, a PHY (physical layer) header, a MAC header, a payload and padding bits ("Pad bits"). In this way, the WiFi frame comprises the WiFi MAC frame.

In other words, by reverse engineering the node (e.g., a WiFi router), all the modules contained within a standard WiFi transmitter (scrambler, channel coding, interleaver and QAM modulator) are by-passed.

Just as an example to illustrate how the symbols are mapped as payload in the lookup table, let us consider the following N-QAM symbols to be transmitted in subcarriers already over the air (RF signal): S6 - S1 - S16 - S11 -- S6, etc. These symbols, in binary format, correspond to: 01 - 00 - 11 - 10 - 01, etc. After looking at the look-up table, a payload corresponding with these symbols is inserted in the WiFi MAC frame have the following hexadecimal format: 0xD9 0xF6 0xFB 0xAE 0x69, etc. Note that this example, for illustrative purposes, only shows the symbols transmitted for a few subcarriers. The other subcarriers work in the same way.

In a preferred embodiment of the LiFi communication network, it comprises at least two LiFi APs;

- wherein the LiFi communication network further comprises a medium access control module communicably coupled with the at least two LiFi APs; and

wherein:

- the medium access control module is configured to allocate transmission time slots for the LiFi APs that are active;
- the LiFi communication network is configured to serve, at each transmission time slot, a number of LiFi APs equal to the number of available frequency resource blocks provided by the node; and
- during the transmission time slots, the active LiFi APs are allocated by the medium access control module with a frequency resource block to send the data to the at least one LiFi-enabled IoT device.

Throughout this specification, a LiFi AP is active when, within its LiFi coverage, has at least one LiFi-enabled IoT device pending to receive data from the node.

Sometimes, the number of LiFi APs to be served are less than or equal to the number of available resource blocks provided by the node. In this case, transmission time slot for the resource blocks are assigned to the same LiFi AP. Otherwise, when the number of LiFi APs that are active simultaneously is higher than a number of available frequency resource blocks, the medium access control module is responsible for the allocation of transmission time slots.

In an embodiment of the LiFi communication network, the medium access control module implements a Frequency Division Multiple Access (FDMA) approach like Orthogonal FDMA (OFDMA) or the like. This is convenient when, in the LiFi communication network, there are a plurality of LiFi APs connected simultaneously to a single node.

In an embodiment of the LiFi communication network, the medium access control module is based on Time Division Multiple Access (TDMA); and said medium access control module is configured to avoid collisions for LiFi access points receiving data on the same frequency resource block.

Advantageously, the medium access control module based on Time Division Multiple Access (TDMA) guarantees the access of all the LiFi APs to the LiFi communication network in the event that there are more (active) LiFi APs than frequency resource blocks provided by the node.

In a preferred embodiment of the LiFi communication network, the node is configured to:

- encode data to the set of frequency resource blocks in the frequency domain by Orthogonal Frequency-Division Multiplexing (OFDM);
- modulate the set of frequency resource blocks using an N-Quadrature Amplitude Modulation (N-QAM), to obtain N-QAM symbols; where $N = 2^x$, and wherein x is a number of bits per symbol and N is a modulation order, the modulation order being the number of possible symbols to be transmitted by the node;
- select a subset of the N-QAM symbols;
- map the subset of N-QAM symbols to Amplitude-Shift Keying modulation, M-ASK, obtaining ASK symbols, or to Frequency-Shift Keying modulation, M-FSK, obtaining FSK symbols;
- transmit the ASK or FSK symbols to the LiFi AP; and

wherein the signal demodulator of each LiFi AP is further configured to demodulate the ASK or FSK symbols and the first conversion module of each LiFi AP is further configured to convert the demodulated ASK or FSK symbols to into an intensity-modulated digital signal following a digital modulation scheme, such as an OOK scheme.

M must be less or equal to N ($M \leq N$). A subset of the N-QAM symbols is selected to create M-ASK or M-FSK. In this way, from N symbols, M symbols are created. N refers to the number of possible symbols QAM in the constellation, and M is the number of possible symbols ASK (or FSK) that are created from N-QAM constellation.

The step of selecting a subset of the N-QAM symbols is relevant in cross-technology communication (CTC). In this way, data generated in the node comprises a payload such that only a subset of the N-QAM symbols are transmitted. For instance, for 2-ASK it is enough to send two symbols, which can be typically the ones exhibiting the largest amplitude difference (i.e., largest Euclidean distance) between them. In preferred embodiments, the subset of N-QAM symbols to be transmitted is chosen to maximize the amplitude difference between them.

In an embodiment, the modulation scheme made by the control unit and that is transmitted to the LiFi unit can be any single-carrier digital modulation scheme, e.g., OOK, pulse amplitude modulation (PAM), pulse-width modulation (PWM), etc. The signal provided by the modulation scheme must be real (positivity of such a signal may be obtained by the driver circuit later on), as it is required for an "optical" signal.

In an alternative embodiment, a multi-carrier scheme (such as any optical-OFDM) can be applied. Still, as the LiFi AP preferably receives a single carrier, a conversion to an optical single carrier is preferred. Consequently, single-carrier schemes are preferred.

In a preferred embodiment of the LiFi communication network, the node is based on RF Orthogonal Frequency Division Multiplexing (RF-OFDM); and wherein the node is preferably one of the following: a WiFi access point, a 4G base station, or a 5G base station.

In this way, the invention is compatible with any OFDM-based device operating as a node.

In a preferred embodiment of the LiFi communication network, the RF-based wireless unit of the at least one LiFi AP is further configured to listen to at least a specific frequency resource block and periodically detect changes in the power at such frequency resource block of the RF signal received from the node.

The purpose of this task is to demodulate the M-ASK or M-FSK symbols received from the node, which is followed by the conversion of said symbols into an intensity-modulated digital signal. In some embodiments, the power of the RF signal is detected by the energy measurement module.

The main advantages provided by the LiFi AP and the LiFi communication network according to the first and the second aspects of the present invention are listed below:

- Increased flexibility for network configuration (LiFi AP locations) due to wireless backhaul connections.
- Reduction of the deployment costs of multi-cell LiFi systems. LiFi APs are equipped with a low-cost and narrowband receiver.
- Increased communication range of the LiFi network. LiFi APs can be connected to the Internet through RF-based nodes that could be obstructed by walls in a separate room.
- Scalability guaranteed by mapping resource blocks to LiFi APs, which increases the number of LiFi APs simultaneously connected to the Internet.
- Low RF congestion by associating LiFi APs to resource blocks.
- Low-power consumption, low-implementation complexity, and low latency by doing a direct conversion from RF to LiFi at the LiFi APs.
- Compatibility with WiFi standards and possibility of using any COTS WiFi router as the node.
- Small form factor which facilitates the integration with IoT devices.

As a summary, the LiFi AP of the invention performs CTC converting WiFi to LiFi, receiving data with a RF front-end that matches its bandwidth and frequency with those of its assigned frequency resource block.

Whilst integrating multiple technologies, the present invention is low cost and has a low complexity, which makes it suitable for dense IoT deployments. Furthermore, the downlink backhaul solution according to the present invention is WiFi-compatible, in order to reduce the installation costs and to boost the adoption in offices and home environments.

A third aspect of the invention is a method for sending data to at least one LiFi-enabled IoT device, the method being carried out by the LiFi access point according to any of the embodiments of the first aspect of the invention or the LiFi communication network according to any of the embodiments of the second aspect of the invention, the method comprising the following steps:

a) receiving, by the RF-based wireless unit, at least one RF signal from a node within at least one frequency resource block; and converting, by the RF-based wireless unit, said at least one RF signal into a baseband signal;

b) demodulating, by the signal demodulator, the baseband signal to obtain a demodulated signal;

c) converting, by the first conversion module and using a modulation scheme, the at least one demodulated signal into an intensity-modulated digital signal; and

d) sending, by the first conversion module, the intensity-modulated digital signal to the driver circuit;

e) adapting, by the driver circuit, the intensity-modulated digital signal to an operating range of the light-emitting diode, to obtain an intensity-modulated optical signal;

f) transmitting, by the at least one LED, the intensity-modulated optical signal to the at least one LiFi-enabled IoT device.

The driver circuit is configured to adapt the intensity-modulated digital signal to obtain the intensity-modulated optical signal. The driver circuit is responsible to adjust the intensity of the intensity-modulated optical signal depending on the operating range of the light-emitting diode. The operating range should be understood as a predetermined intensity range for a proper working of said light-emitting diode, thereby avoiding the burnout or malfunction of said light-emitting diode. In other words, the operating range is such between the turn on voltage (or turn on current) and the saturation voltage (or saturation current) of an LED operation, i.e., the minimum and maximum values to which it must be operated.

In a preferred embodiment of the method according to the third aspect, the at least one RF signal comprises:

- an RF preamble;
- a command field preceded by the RF preamble; the command field comprising specific actions to be performed by the LiFi AP;
- a LiFi preamble; and
- a LiFi data field preceded by the LiFi preamble; the LiFi data field comprising data to be transmitted from the LiFi unit to the at least one LiFi-enabled IoT device;

and in the method:

step a) comprises adjusting one or more demodulation parameters according to the RF preamble of the RF signal; and

step b) is performed according to the one or more demodulation parameters to obtain a demodulated signal; and said step b) comprises:

- decoding the command field of the received RF signal;
- checking whether the action or actions of the command field must be executed or not;
- decoding the LiFi preamble and the LiFi data field to obtain the demodulated signal; and
- sending the demodulated signal to the first conversion module;

wherein if it is found that the at least one action of the command field must be executed, said at least one action is performed by the RF-based wireless unit, and/or the control unit, and/or the LiFi unit.

In a preferred embodiment of the method according to the third aspect, said method is carried out by the LiFi communication network of any of the embodiments of the second aspect of the invention, and the method comprises, prior to steps a) to f), allocating by the node, one or more frequency resource blocks to the at least one LiFi AP.

In a more preferred embodiment of the method according to the previous paragraph, the method is carried out by the LiFi communication network, and allocating by the node one or more frequency resource blocks:

- is performed by a medium access control module in the node, and
- further comprises assigning a transmission time slot for each of the at least two LiFi APs;

and wherein the assignation of the transmission time slot comprises:

- checking, by the control unit of each of the at least two LiFi access points, whether their transmission time slot has started or not;
- if the transmission time slot has not started yet, putting the LiFi access point in IDLE state and waiting until its transmission time slot starts; or
- if the transmission time slot has started, putting the LiFi access point in active state and continuously waiting for the reception of an RF signal until an RF preamble of the frequency resource block is detected.

In this way, the allocating step is performed depending on whether it can run in parallel or not. In some embodiments, if transmissions for multiple LiFi APs are on different frequency resource blocks, they can occur in parallel and a time slot can be allocated to each of them. Otherwise, if they are in the same frequency resource block, then a TDMA approach can be followed to decide the access to the LiFi communication network in order to assign time slots to the different LiFi APs.

In the context of the present invention, IDLE state is understood as a limited state of the LiFi AP with minimum operation, namely a waiting operation where the LiFi AP waits until the transmission time slot starts. On the other hand, the active operation is interpreted as the state where the LiFi AP is transmitting and/or receiving data.

In an embodiment of the method according to the third aspect, it further comprises the following steps performed by the node:

- encoding data to a set of frequency resource blocks in the frequency domain by Orthogonal Frequency-Division Multiplexing, OFDM;
- modulating the set of frequency resource blocks using an N Quadrature Amplitude Modulation, N-QAM, to obtain N-QAM symbols; where $N = 2^x$, and wherein x is a number of bits per symbol and N is a modulation order, the modulation order being the number of possible symbols to be transmitted;
- selecting a subset of the N-QAM symbols;
- mapping the subset of N-QAM symbols to Amplitude-Shift Keying modulation, M-ASK, or Frequency-Shift Keying Modulation, M-FSK, thereby obtaining ASK or FSK symbols; and
- transmitting the ASK or FSK symbols to the at least one LiFi AP.

In the scope of the present invention, $M \leq N$ and both M and N are natural numbers.

In a preferred embodiment, in the method according to the previous embodiment:

- step b) comprises demodulating the ASK or FSK symbols; and
- step c) comprises converting the demodulated ASK or FSK symbols into the intensity-modulated digital signal following a digital modulation scheme, such as an OOK scheme.

In an embodiment of the invention, the method according to the previous embodiment can be preceded by a step of applying TDMA performed by the medium access control module, in the event of having multiple transmissions sharing the same frequency resource block.

Finally, it is worth pointing out that the LiFi access point and the LiFi communication network according to the present invention are appropriate under both LoS (Line of Sight) and NLoS (Non-Line of Sight) scenarios.

All features described in this specification, including the claims, description and drawings, can be combined in any way except for combinations of mutually exclusive features.

## DESCRIPTION OF THE DRAWINGS

These and other features and advantages of the invention, will become more clearly apparent from the following detailed description of a preferred form of embodiment, given solely by way of illustrative and non-limiting examples, with reference to the accompanying figures.

Figure 1A     This figure illustrates the elements of a LiFi AP according to an embodiment of the present invention.

Figure 1B     This figure is an explanatory diagram of some operations performed by an embodiment of the LiFi AP of the present invention.

Figure 1C     This figure shows a preferred embodiment of the RF-based wireless unit of the LiFi AP according to the invention.

Figure 1D     This figure illustrates an implementation of the driver circuit of the LiFi AP according to an embodiment of the invention.

Figure 2A     This figure illustrates an embodiment of the architecture of LiFi communication network according to the present invention.

Figure 2B     This figure summarizes the downlink operation of the LiFi communication network according to an embodiment of the present invention.

Figure 3A     This figure shows the operation of a battery-free IoT tag based on a passive LiFi receiver (a solar cell).

Figure 3B     This figure illustrates the node operation in an embodiment of the LiFi communication network of the invention.

Figure 3C     This figure shows an embodiment of a node according to an embodiment of the invention.

Figure 3D     This figure shows a scheme of a reverse engineering process to reverse engineer a WiFi router to control the amplitude of the signal transmitted at each subcarrier.

Figure 4     This figure shows the constellation points (symbols) of 64-QAM.

Figure 5     This figure shows the OFDM spectrum for different 64-QAM symbols per frequency resource block.

Figure 6     This figure depicts an example of the frequency resource blocks allocation among different LiFi APs according to an embodiment of the present invention when using a standard-compliant WiFi router as the node in the LiFi communication network according to the present invention.

Figure 7     This figure illustrates a data frame format for downlink transmission.

Figure 8     This figure illustrates how the direct conversion from RF to OWC is performed by the LiFi access point in an embodiment of the present invention.

Figure 9     This figure illustrates the workflow of the LiFi access point according to an embodiment of the present invention.

## DETAILED DESCRIPTION OF THE INVENTION

In the embodiments illustrated in this section, the node is a WiFi router. However, in other embodiments of the invention, the node can be replaced by other types of nodes (e.g., 4G or 5G base stations). It is worth to underline that the node does not necessarily connect the LiFi AP to an Internet network. Indeed, the node can connect the LiFi AP to a local network isolated from the Internet.

Operation of the LiFi access point (1)

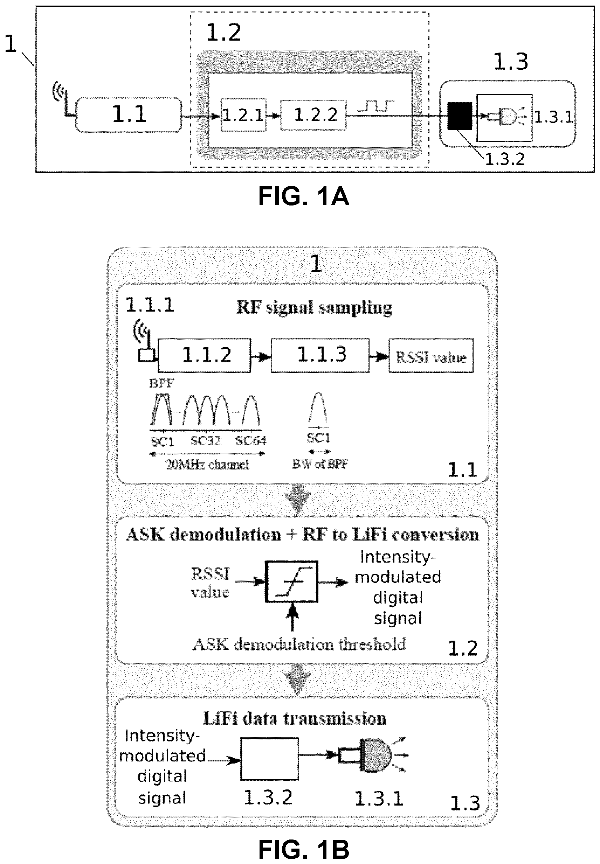

A preferred embodiment of the LiFi access point (1) according to the first aspect of the present invention is shown in Figure 1A. Said LiFi access point (1) comprises a RF-based wireless unit (1.1), a control unit (1.2) and a LiFi unit (1.3), wherein:

- The RF-based wireless unit (1.1) is configured to receive at least one RF signal from a node (5).
- The control unit (1.2), for instance a microcontroller, comprises a signal demodulator (1.2.1) and a first conversion module (1.2.2) communicably coupled with both the RF-based wireless unit (1.1) and the LiFi unit (1.3).
- The LiFi unit (1.3), which is an Optical Wireless Communication (OWC) transmitter, comprises a light-emitting diode (LED) array (1.3.1) and a driver circuit (1.3.2).

The control unit (1.2) is communicably coupled with the RF-based wireless unit (1.1) and a LiFi unit (1.3).
The driver circuit (1.3.2) communicably couples the first conversion module (1.2.2) of the control unit (1.2) with the light-emitting diode array (1.3.1). In this embodiment, the light-emitting diode array (1.3.1) works in visible light.
The control unit (1.2) is in communication with the RF-based wireless unit (1.1) and the LED unit (1.3) and it is configured to perform the following steps:

- receiving, by means of the RF-based wireless unit (1.1), the at least one baseband signal;
- demodulating, by means of the signal demodulator (1.2.1), the at least one baseband signal to obtain a demodulated signal;
- converting, by means of the first conversion module (1.2.2) and using a modulation scheme, the at least one demodulated signal into an intensity-modulated digital signal (this last signal modulates the intensity of the light emitted by the light-emitting diode array (1.3.1)); and
- sending, by means of the first conversion module (1.2.2), the intensity-modulated digital signal to the driver circuit (1.3.2).

In an example, the signal demodulator (1.2.1) is an ASK (Amplitude-Shift Keying) demodulator which receives data from a RF network. In other example, the signal demodulator (1.2.1) is an FSK (Frequency-Shift Keying) demodulator which receives data from a RF network.
For the rest of the detailed description, it will be assumed that the signal demodulator (1.2.1) is an ASK demodulator. However, the embodiments explained below can be adapted to an FSK demodulator.
Additionally, the LiFi unit (1.3) is configured for:

- adapting, by the driver circuit (1.3.2), the intensity-modulated digital signal to an operating range of the at least one light-emitting diode (1.3.1), to obtain an intensity-modulated optical signal; and
- transmitting, by the light-emitting diode (1.3.1), the intensity-modulated optical signal to the at least one LiFi-enabled IoT device (6).

Just as a clarification, the following signals are relevant for describing the operation of the LiFi unit (1.3):

- - the "intensity-modulated digital signal", which is the signal inputted to the driver circuit (1.3.2); after the processing carried out by the control unit (1.2).
- - the "intensity-modulated optical signal", which is the signal between the driver circuit (1.3.2) and the LED array (1.3.1); and which is then outputted by the LED array (1.3.1).

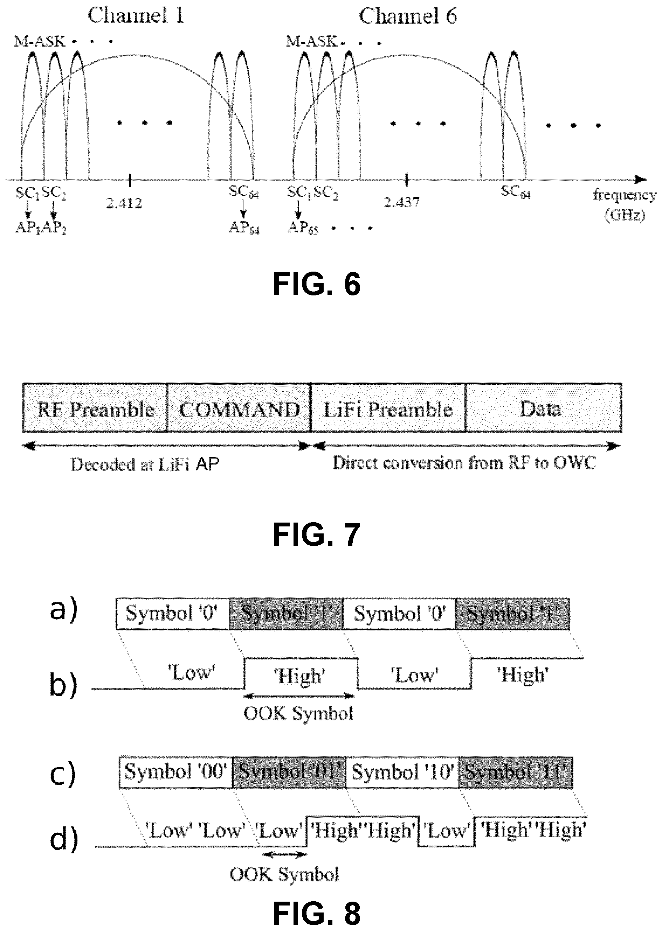

The LiFi unit (1.3) is configured for sending data to LiFi-enabled IoT devices (6), while the control unit (1.2), e.g. a microcontroller, is in charge of managing the conversion operation from RF signals to OWC data. The LiFi access point (1) provides unidirectional communication from a node (5) to several LiFi-enabled IoT devices (6). During its operation, the LiFi access point (1) directly converts the received RF signal to an optical signal that modulates the light of the light-emitting diode array (1.3.1) at the LiFi unit (1.3). This conversion operation requires minimum packet buffering and processing, thus minimizing delays and power consumption at the LiFi AP (1). In this way, the LiFi AP (1) implements a low-power, low-complexity, and low-latency direct conversion from RF to OWC. An example of the direct conversion technique is explained in greater detail later with regard to Figure 8.

Figure 1B shows the main functionalities of the LiFi Access Point (1) during downlink operation. As it can be observed, the LiFi access point (1) is in charge of different tasks:

(i) Taking a power measurement of the received RF signal on the WiFi subcarrier (SC) it is associated with in order to retrieve Received Signal Strength Indicator (RSSI) values from it. This power measurement is performed by the RF-based wireless unit (1.1).
(ii) Performing the ASK demodulation and the conversion from RF to LiFi, by taking into account the received RF signal, and comparing the RSSI values of a resource block (i.e. filtered signal) of said received RF signal with an ASK demodulation threshold. In this way, an intensity-modulated digital signal is obtained. This operation is performed by the control unit (1.2).
(iii) Performing the LiFi transmission to the LiFi-enabled IoT devices (6) (e.g., IoT tags), which is performed by the LiFi unit (1.3). Particularly, the driver circuit (1.3.2) receives the intensity-modulated digital signal and generates an intensity-modulated optical signal which subsequently modulates the light of the light-emitting diode (1.3.1).

To decode WiFi data frames (packets) received from a node (5), the LiFi access point (1) comprises an energy measurement module (1.1.3) configured to detect the amplitude variations on the data subcarrier (SC) it is associated with. Then, the RSSI values obtained by the energy measurement module (1.1.3) are considered to recover the M-ASK symbol.

In this way, the demodulation threshold is derived from RSSI readings corresponding to the WiFi preamble of the WiFi data frame. The WiFi preamble is a predefined sequence which is the same for all the received signals. Threshold for demodulation is configured by measuring the power of the received WiFi preamble, and the measured power of the symbol with the lowest energy (S1).

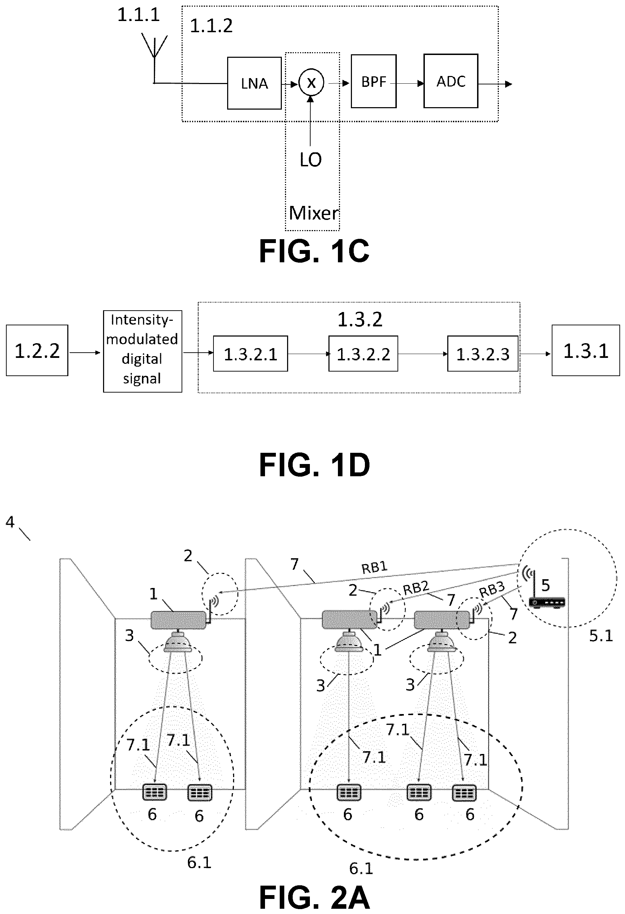

Figure 1C shows a preferred embodiment of the RF-based wireless unit (1.1) that is configured to receive at least one RF signal, to process it, and to digitize it such that it can be inputted into the control unit (1.2). The control unit (1.2) requires a digital conversion of the signal to work, because the electronics of said control unit (1.2) comprise digital-logic circuits.

Particularly, in an embodiment illustrated in Figures 1B and 1C, the RF-based wireless unit (1.1) comprises:

- an RF antenna (1.1.1), which is configured to capture the at least one RF signal transmitted by a node (5) and to send the at least one RF signal to a RF front-end (1.1.2);
- a RF front-end (1.1.2) which in turn comprises:

  ○ a low-noise amplifier, LNA, which is configured to receive the at least one RF signal, to amplify the at least one RF signal in order to obtain an amplified RF signal, and to send the amplified RF signal to a mixer;
  ○ a mixer comprising a local oscillator, LO; the mixer being configured to downconvert to baseband the at least one amplified RF signal by mixing the amplified RF signal with a LO signal; thereby obtaining at least one baseband signal;
  ○ at least a filter configured to filter the at least one baseband signal in order to obtain at least one filtered signal; and
  ○ an Analog-to-Digital converter, ADC, configured to digitize the at least one filtered signal and to send the at least one filtered signal to an energy measurement module (1.1.3);

- an energy measurement module (1.1.3), which is configured to measure a signal power value from the at least one digitized signal outputted by the RF front-end (1.1.2).

The digitized signal is the signal received in at least one specific resource block of the RF signal. In this way, the RF signal comprises multiple frequency resource blocks, and the LiFi AP (1), depending on the filter included in the RF front-end (1.1.2), can detect power variations of a specific resource block.

Then, variations of the power in the RF signal are detected. More particularly, power variations are detected on the at least one frequency resource block of the RF signal.

In some embodiments, the filter is either a band-pass filter (BPF), or a low-pass filter. The signal power value can be measured as a RSSI.

In preferred embodiments, the RF-based wireless unit (1.1) of the LiFi access point (1) operates as follows:

- First, the RF antenna (1.1.1) captures the at least one RF signal and sends it to a LNA.
- Then, the LNA amplifies said at least one RF signal while minimizing the additional noise included into the at least one RF signal, and it sends the amplified RF signal to the mixer.
- Afterwards, the mixer downconverts the amplified RF signal to work in baseband. For this purpose, the amplified RF signal is mixed with a LO signal to downconvert.

- Once the baseband signal is available, the filter (either the BPF or the low-pass filter) filters it and removes the rest of signal components of the baseband signal that are in different frequency undesirable bands, thereby obtaining a filtered signal.
- Finally, the filtered signal (which is an analog signal) is inputted to the ADC, which digitizes said filtered signal into a digital signal.

Figure 1D is a diagram of an embodiment of the driver circuit (1.3.2) of the LiFi access point (1). Said driver circuit (1.3.2) comprises the following electronics:

- A signal clipping and linear scaling module (1.3.2.1), which is configured to receive the intensity-modulated digital signal provided by the first conversion module (1.2.2) and to accommodate said intensity-modulated digital signal (baseband electrical signal) within a predetermined operating range of the light-emitting diode (1.3.1).
- A Digital-to-Analog converter, DAC (1.3.2.2), which is configured to convert the intensity-modulated digital signal into an analog signal.
- A biasing module (1.3.2.3), which is configured to add a direct current (DC) offset to the analog signal obtained by the DAC (1.3.2.2) to guarantee positive-values in the analog signal, thereby obtaining an intensity-modulated optical signal. The intensity-modulated optical signal is a fully-positive valued signal, since the light-emitting diode (1.3.1) cannot transmit negative values. The biasing module (1.3.2.3) is also configured to transmit over the air said intensity-modulated optical signal to the light-emitting diode (1.3.1). The intensity-modulated optical signal is modulated either in voltage and/or in current, and it can be transmitted over the air to the light-emitting diode (1.3.1).

The signal clipping and linear scaling module (1.3.2.1) is an optional element, which is missing in other embodiments of the driver circuit (1.3.2). In those embodiments, the intensity-modulated digital signal is directly inputted to the DAC (1.3.2.2).

Embodiment of the LiFi communication network (4)

One or multiple LiFi access points (1) like the one in Figure 1A can be integrated in a LiFi communication network (4) like the one illustrated in Figure 2A, in which a first network interface (2) communicably couples each of the LiFi access points (1) with a node (5). In this way, RF signals are transmitted by the node (5) and received by the LiFi access point (1). The node (5) is deployed in a RF wireless communication network (5.1) (also referred to as backhaul RF network).

The communication between each of the LiFi access points (1) and the node (5) may comprise dedicated RF downlinks (7) (RF backhaul links). On the other hand, a second network interface (3) communicably couples a LiFi access point and at least one LiFi-enabled Internet of Things (IoT) device (6), which is deployed in a LiFi access network (6.1), through an OWC (LiFi) link. This LiFi access link may comprise a dedicated LiFi downlink (7.1) (the LiFi access link).

A conversion is performed between the modulation supported by the RF downlink (7) and the one in the LiFi downlink (7.1), since LiFi entails intensity modulation for transmission. OFDM backhaul uses QAM-based modulation, thus a conversion is carried out in the LiFi AP (1) to map into an intensity modulation suitable for the light-emitting diode or diodes (1.3.1).

In an embodiment, the LiFi-enabled IoT devices (6) are low-power LiFi-enabled IoT devices (6). In a preferred embodiment, the low-power LiFi-enabled IoT devices (6) are battery-free IoT tags. In other preferred embodiment, the low-power LiFi-enabled IoT devices (6) comprise one or more solar cells suitable for light energy harvesting and data reception through a passive LiFi link.

Each of the three LiFi access points (1) displayed in Figure 2A is allocated with a specific frequency resource block (RB1, RB2, RB3) from the node (5) and is communicably coupled to said node (5) by a dedicated RF downlink (7). Each of the frequency resource blocks (RB1, RB2, and RB3) (e.g., OFDM blocks) is defined by a frequency carrier and at least a channel bandwidth. In this way, the dedicated RF downlinks (7) serves for transferring frequency access blocks from the RF node (5) to the LiFi access points (1). As later detailed in connection with Figure 7, said frequency resource blocks are structured as one or more RF data frames. Finally, in this embodiment each of the LiFi-enabled IoT devices (6) is communicably coupled to one of the LiFi access points (1) by a dedicated LiFi downlink (7.1).

For LiFi downlink (7.1), an option is to use RF backhauling to transmit WiFi subcarriers. Battery-free IoT tags can be a few meters away from the LiFi acess points (1).

In Figure 2A, the LiFi access points (1) serving the LiFi-enabled IoT devices (6) are, in turn, connected via RF backhauling to the node (5) that could provide Internet access. Thus, the LiFi access points (1) act as gateways between the RF backhaul and the LiFi access networks (that is to say, as gateways between the RF wireless communication network (5.1) and the LiFi access network (6.1)). The node (5) is the central control unit for the IoT network, as it provides Internet access and coordinates the transmission slots of the LiFi-enabled IoT devices (6) through the LiFi access points (1).

In the downlink, the LiFi AP (1) acts as a relay node to convert the incoming RF signal into a light signal to be decoded by the LiFi-enabled IoT device (6). In an example, the LiFi access point (1) transmits the data to the IoT tag using OOK modulation.

Since the downlink solution provided by the present invention is based on frequency resource blocks like OFDM, any RF-OFDM-based Commercial Off-The-Shelf (COTS) device (i.e., WiFi APs, 4G, and 5G base stations) can be used as the node (5). From now on, the remaining embodiments of this section assumes that the node (5) is a standard-compliant WiFi router.

Advantageously, the LiFi communication network (4) allows concurrent downlink transmissions and several low-power IoT devices (6) can be connected to the same LiFi access point (1). In the event of more active LiFi access points (1) than available frequency resource blocks, the LiFi communication network (4) also comprises a medium access control module based on Time-Division Multiple Access (TDMA) approach which is followed to ensure each LiFi access point (1) is allocated with a transmission slot.

Finally, it should be noticed that the node (5) in the LiFi communication network (4) is not necessarily dedicating all its available resources (i.e., frequency channels) to communicating with a LiFi access network (6.1) where the IoT devices are deployed. For example, when considering a WiFi router as the node (5), it can dedicate some time resources to the LiFi access network (6.1) and the rest of resources to legacy WiFi networks. This resource allocation is managed from the node (5) and may depend on the current LiFi communication network (4) demands and applications.

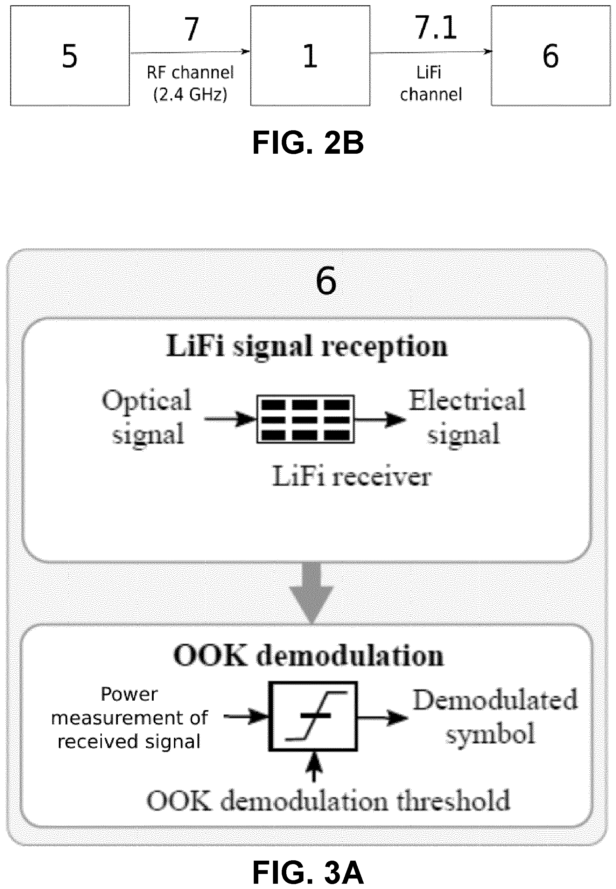

Figure 2B shows the downlink operation of the proposed LiFi communication network (4), wherein the LiFi Access Point (1) performs communication between two technologies: the first one (WiFi) operating in the 2.4 GHz band, and the second one (LiFi) in the visible light spectrum.

Figure 3A summarizes the operation of a battery-free IoT tag suitable for its use as a LiFi-enabled IoT device (6) in the LiFi communication network (4) of the present embodiment. In the particular case of Figure 3A, the tag is embodied as a passive LiFi receiver, particularly a solar cell, configured to convert the intensity-modulated optical signal (abbreviated in the figure as "optical signal") into an electrical signal. Then, the power of this electrical signal is measured and afterwards the electrical signal is demodulated following an OOK scheme. To carry out said demodulation, the IoT tag compares a power measurement of the electrical signal and an OOK demodulation threshold, thereby obtaining demodulated symbols of information.

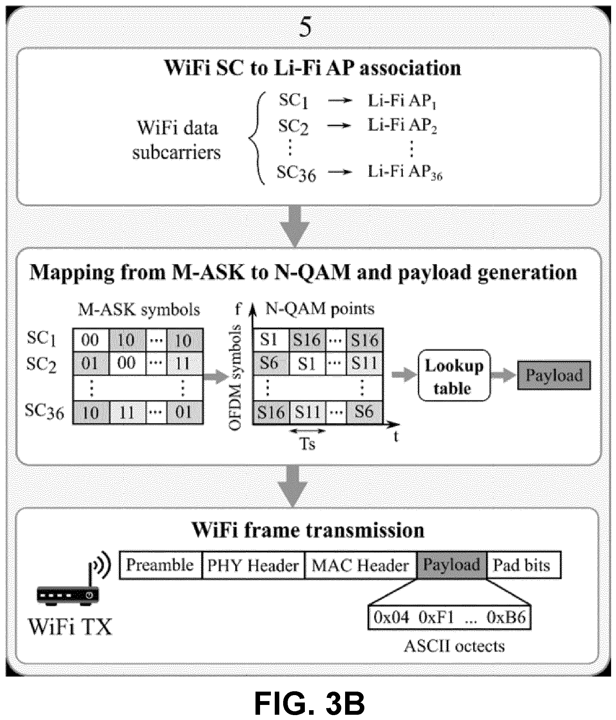

Figure 3B shows an example of the node (5). The node (5) is in charge of communicating with the LiFi access point (1) in downlink. In downlink of this example, OFDM modulation scheme of IEEE 802.11g/n WiFi standards is applied in the LiFi communication network (4) to implement an Amplitude Shift Keying (ASK)-OFDM modulation scheme per data subcarrier by reverse engineering a COTS WiFi chipset.

During downlink operation, the node (5) sends data to multiple LiFi access points (1) simultaneously by associating them with different WiFi subcarriers (SC). More specifically, the node (5) embeds the data to different LiFi access points (1) into WiFi frames with an elaborated payload that, once transmitted over the air, emulates an M-ASK modulation scheme at each WiFi data subcarrier. Hereinafter, this will be called ASK-OFDMA modulation scheme, which will be detailed later.

As shown in Figure 3B, the WiFi MAC frame (or simply MAC frame) comprises a MAC Header and Payload, while the entire WiFi frame comprises the Preamble, the PHY header, the MAC Header, the Payload and the Pad bits.

As depicted in Figure 3B, in an embodiment the node (5) performs the following tasks during downlink operation:

(i) Associating WiFi data subcarriers (SC) to the LiFi access points (1), in order to enable simultaneous transmissions in the downlink. Note that in this embodiment there are 36 LiFi access points (1), thus in that case, the LiFi communication network (4) may communicate in the downlink with up to 36 LiFi access points (1) simultaneously, being limited by the number of WiFi data subcarriers within an OFDM symbol. If there is more than one IoT tag associated with a LiFi access point (1), then a TDMA approach is followed to give access to the IoT tags.

(ii) Mapping from M-ASK to N-QAM symbols to perform an ASK-OFDMA modulation scheme with SC granularity.

(iii) Obtaining the payload to embed the data for multiple LiFi access points (1) in a single WiFi frame (packet) transmission. This step is performed by checking a lookup table that results from reverse engineering the WiFi data transmitter. This lookup table is generated once before the communication starts, and then said look-up table is provided to the node (5) as an input to operate.

(iv) Generating a standard compliant WiFi frame with the payload computed in the previous step.

(v) Transmitting said WiFi frame to the LiFi access point (1) via a RF channel (in this case, a 2.4 GHz channel), through the air interface.

Figure 3B shows the case of a Wifi router as a particular kind of node (5). Still, other RF nodes (5) with OFDM/OFDMA capabilities can perform these steps.

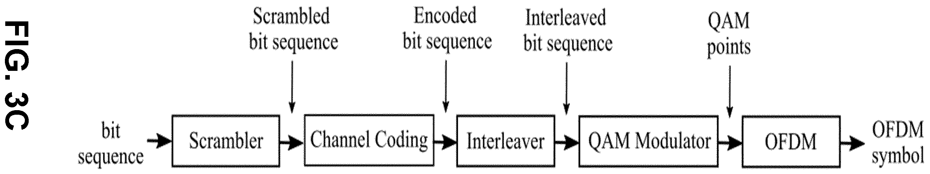

Reverse engineering of the node (5) (which in this embodiment is a WiFi transmitter) entails reversing the effect of the following blocks: Scrambler, Channel Coding, Interleaver, and QAM modulator, which are represented in Fig. 3C.

These blocks are contained in a conventional WiFi router and they indirectly "randomize" the signal strength transmitted at each subcarrier of the RF signal. Therefore to have a control of the signal strength at each subcarrier, the role of these blocks is reversed. This reverse engineering is performed prior to the onset of the communications, so a look-up table that contains all the possible combinations of N-QAM symbols to be carried at each subcarrier of the RF signal is provided as an input to the method of the invention. Each of these combinations results in a specific MAC payload for the WiFi frame. Thus, depending on the data (that is to say, N-QAM symbol) to be transmitted to each LiFi AP, the MAC payload corresponding to that N-QAM symbol combination is injected on the WiFi frame. The MAC payload can be found in the look-up table.

The reverse engineering is performed by software, which takes as input the desired distribution of QAM points among the WiFi data subcarriers and returns the specific MAC Payload that must be inserted within a WiFi packet to ensure that, once transmitted over the air, each WiFi subcarrier is actually carrying the desired QAM point. For each specific combination of QAM points among the WiFi data subcarriers, there is a corresponding MAC Payload that is obtained with the reverse engineering software. By covering all the possible combinations of QAM points among the WiFi data subcarriers, it is possible to create the look-up table mentioned in iv).

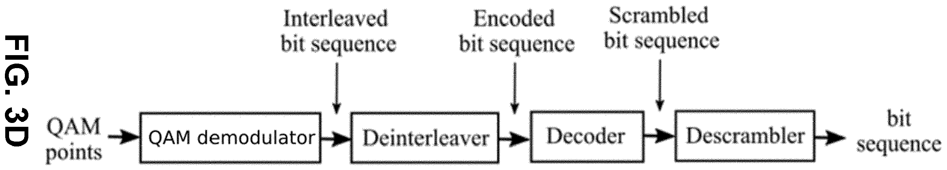

The reverse engineering process is represented in Fig. 3D. As shown, the input of the reverse engineering software is a vector with the QAM points to insert on each WiFi data subcarrier. Such vector results from both the association of LiFi APs (1) with WiFi data subcarriers and the mapping from M-ASK to N-QAM shown in Fig. 3B. Also, note that such an input vector emulates a WiFi OFDM symbol since it consists of a list of QAM constellation points. As depicted in Fig. 3D, first, the Demodulator block transforms the QAM points into bit sequences. This conversion depends on the order of the QAM modulation being used. For 64-QAM, each QAM point is transformed into a 6-bit sequence. Then, the Deinterleaver reverses the effect of the Interleaver block shown in Fig. 3C by reordering the bit sequence. After that, the Decoder reverses the channel encoding process, producing the original non-encoded bit sequence, but still the order of the bits in not the original one. Finally, the ordered bit sequence is obtained by reversing the effect of the scrambler with the Descrambler block. The MAC Payload to be transmitted is generated by converting the original bit sequence into HEX format. Such a MAC payload is then passed to a packet injection tool that sends the WiFi packets with the desired MAC payload using the WiFi interface.

As illustrated in Figure 3B, the node (5) exploits the features of N-QAM to encode the data of each WiFi SC with the amplitude of the QAM point assigned to each of them. Particularly, the node (5) works as a WiFi transmitter (TX) configured to only use the 64-QAM points summarized in Table 1, that is, it only uses S1, S6, S11 and S16; as well as it places them accordingly among the data SC comprising each OFDM symbol. The imaginary number is denoted by j in Table 1.

Table 1: Mapping between 64-QAM, 2-ASK, and 4-ASK symbols.

| 64-QAM symbols | 2-ASK bit symbols | 4-ASK bit symbols |
|---|---|---|
| $S1 = \frac{1}{\sqrt{42}}(1+j)$ | 0 | 00 |
| $S6 = \frac{1}{\sqrt{42}}(3+3j)$ | - | 01 |
| $S11 = \frac{1}{\sqrt{42}}(5+5j)$ | - | 11 |
| $S16 = \frac{1}{\sqrt{42}}(7+7j)$ | 1 | 10 |

In this way, a single WiFi OFDM symbol contains data for multiple LiFi APs (1) which can be conveyed to them simultaneously. The selection of the aforementioned symbols S1, S6, S11 and S16 is because they exhibit the largest Euclidean distance between them, thereby ensuring the most easily distinguishable ASK symbols.

Figure 3B also shows an example of how the mapping from N-QAM to M-ASK takes place. For instance, when using 2-ASK to transmit the bit-stream '0, 1, ..., 1' to the LiFi AP1, the WiFi transmitter places the 64-QAM symbols 'S1, S16, ..., S16' on subcarrier 1 ($SC_1$) of consecutive WiFi OFDM symbols. Attention is drawn to the fact that the maximum number of simultaneous transmissions with ASK-OFDMA is limited to the number of data SC within a WiFi OFDM symbol (48 according to the IEEE 802.11g/n standards). Also, it is worth pointing out that the maximum transmit rate (symbol rate) is determined by the duration of the WiFi OFDM symbols (Ts, as illustrated in Figure 3B). Thus, considering the IEEE 802.11g/n standards, the maximum symbol rate is 250 ksymbols/s (i.e, 1/Ts = 4 μs), which is sufficient for battery-free IoT

tags. Furthermore, this symbol rate can be further reduced by transmitting equal consecutive WiFi OFDM symbols. For instance, the ASK-OFDMA transmitter is able to operate at three different rates, 125 kb/s, 62.5 kb/s, and 31.25 kb/s, by sending 2, 4 and 8 consecutive identical WiFi OFDM symbols, respectively.

The WiFi transmitter (TX) of the node (5) can be implemented, for example, by using a COTS WiFi chipset integrated into a computer (i.e. Intel NUC). Then, MATLAB is used to reverse engineering the WiFi data encoding and to derive the look-up table that maps the vector of N-QAM symbols to be transmitted on each subcarrier to a valid WiFi payload. Since the M-ASK symbols to be transmitted are embedded into the payload of a WiFi frame (see Figure 3B), the maximum number of transmitted M-ASK symbols is limited to the IEEE802.11 payload size (i.e. 2304 bytes without aggregation), which in turn depends on the coding rate and the particular N-QAM modulation applied. For instance, when using 64-QAM and a coding rate of 3/4 (MCS6, IEEE 802.11n), the maximum number of ASK symbols that can be transmitted to each LiFi AP (1) within a WiFi frame is 85.

The mapping from OFDM (N-QAM, Quadrature Amplitude Modulation) to M-ASK is performed in the LiFi AP (1), in order to adapt the modulation of the resource blocks to the one required by LiFi transmission in the LiFi unit (1.3).

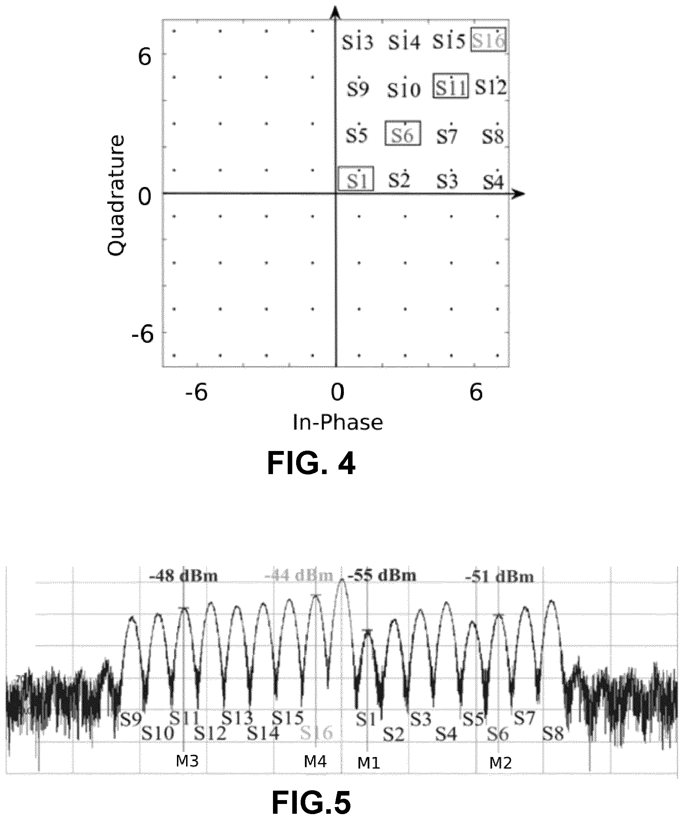

OFDM modulation encodes data in the frequency domain to a set of frequency resource blocks which are typically modulated using an N- Quadrature Amplitude Modulation (M-QAM) scheme. Therefore, different symbols (points) in the constellation provide different amplitudes, as depicted in Figure 4, which shows the constellation diagram for 64-QAM.

For instance, the symbols denoted as S1, S6, S11, and S16 are a subset of symbols which provide four different amplitude levels while ensuring the largest amplitude difference (i.e., largest Euclidean distance) between them. This feature of N-QAM modulation can be exploited to encode the data of individual resource blocks only using the amplitude of the QAM symbol (e.g., doing M-ASK from N-QAM). Such an approach can be easily implemented in any RF-OFDM-based COTS device (i.e., WiFi access point, 4G or 5G base stations) by choosing the right payload for transmission. By doing so, the RF-OFDM-based transmitter is configured to only using the 64-QAM symbols highlighted in Figure 4 (i.e., S1, S6, S11, and S16) and placing them accordingly among the frequency resource blocks comprising each OFDM symbol to convey the desired data to the LiFi AP (1).

In this way, the 64-QAM symbols S1, S6, S11, and S16 are used for the mapping from M-QAM to M-ASK because they provide the largest Euclidean distance between them, ensuring the most distinguishable ASK symbols as shown in the OFDM spectrum from Figure 5. In Figure 5, the horizontal axis refers to the frequency, so that this is a representation in the frequency domain (spectrum).

Figure 6 exemplifies the frequency resource blocks allocation among different LiFi APs (1) of a LiFi communication network (4) when using a standard-compliant WiFi router (i.e., IEEE 802.11 g/n standards) as the node (5). This example considers WiFi channels of 20 MHz, individual WiFi subcarrier as frequency resource blocks and M-ASK (M-Amplitude Shifting Keying) modulation. However, the same approach applies to other channel bandwidths. According to the IEEE 802.11 g/n standards, only 48 out of 64 WiFi subcarriers ($SC_1$, $SC_2$... $SC_{64}$) are used for data transmission when considering 20 MHz WiFi channels. So, in this case, simultaneous transmissions from the WiFi router to a maximum of 48 LiFi APs (1) can be provided.

Figure 7 illustrates a possible RF data frame structure for downlink transmission which is transmitted by the node (5) to the LiFi access point (1). It comprises a RF preamble, a command field, a LiFi preamble, and a LiFi data. The RF preamble is used as a header to delimitate the command field, said RF preamble being transmitted from the node (5) to the LiFi access point (1) on the RF link. The COMMAND field contains specific actions to be taken at the LiFi access point (1) (e.g., adjusting the dimming level according to user requirements, adjusting LiFi cell diameter, etc.). Finally, the LiFi preamble is another header for delimitating the LiFi data exchanged in the LiFi link between the LiFi access point (1) and the IoT devices. From Figure 7, it should be noticed that only the RF preamble and command field are detected and decoded at the LiFi access point (1). The rest of the data frame is directly converted from RF to OWC.

As mentioned before, the direct conversion technique significantly reduces the implementation complexity at the LiFi Access Point (1) by getting rid of any packet processing or packet buffering, which also minimizes the system delay, power consumption and hardware requirements, while providing low complexity, low latency and resilience to interference.

Figure 8 depicts how the direct conversion technique from RF to OWC data is carried out by the LiFi access point (1) when considering the use of M-ASK and OOK (On-Off Keying) modulation schemes at the RF and OWC (LiFi) links at the first (2) and second (3) network interfaces, respectively. From top to the bottom, Figure 8 shows:

    a) Demodulated symbols (2-ASK).
    b) OOK signal sent to the LED with 2-ASK.
    c) Demodulated symbols (4-ASK).
    d) OOK signal sent to the LED with 4-ASK.

As it can be observed, the shape of the OOK signal provided to the LED array (1.3.1) depends on the demodulated ASK symbols. When using 2-ASK, each time a new ASK symbol is demodulated, the modulating signal to the LED is updated to 'High' if it was '1' or to 'Low' if it was '0'. For 4-ASK, the OOK signal is updated to 'Low-Low', 'Low-High', 'High-Low', or 'High-High', when the demodulated ASK symbols are '00', '01', '10', or '11', respectively. Indeed, by using 4-ASK, the data rate is doubled on both the downlink of the backhaul and LiFi access networks in comparison with 2-ASK by halving the OOK symbol duration.

From Figure 8, it should also be noticed that the LiFi access point (1) acts as a relay node carrying out a traditional amplify-and-forward technique. However, in this context the translation is from one technology (RF) to another (OWC) rather than forwarding it with the same technology.

Hardware implementation of the LiFi access point (1)

In an embodiment, the LiFi AP (1) comprises three hardware components:

- A RF chipset (e.g., AT86RF215) configured to receive the ASK signals coming from the node (5).
- An Open VLC1.3 cape to send LiFi data to the battery-free IoT tags. OpenVLC is an open-source and low-cost Visible Light Communication System platform.
- A BeagleBone Black (BBB) platform to control the RF chipset and OpenVLC hardware components and to perform the direct conversion from RF to LiFi. Both the RF chipset and the OpenVLC1.3 cape are directly connected to the general purpose Input/Output (GPIO) pins of the BBB.

Embodiment of LiFi access point (1) operation workflow (100)

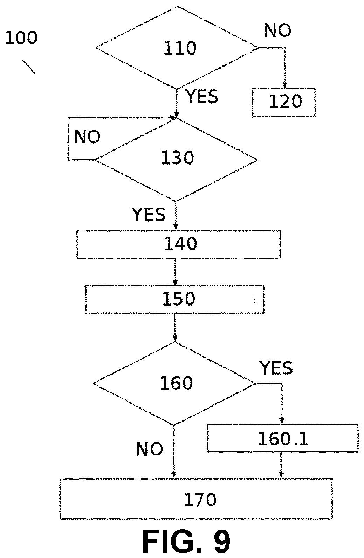

Figure 9 shows an embodiment of the operation workflow (100) of the LiFi access point (1) when it comes to decode a data frame like the one illustrated in Figure 7. In order to save energy, the LiFi access point (1) remains in the IDLE state until the transmission interval starts. Once its transmission interval has begun, the LiFi AP (1) keeps checking the detection of the RF preamble. If the RF preamble is detected, the LiFi AP (1) adjusts the RF demodulation parameters accordingly and proceeds to decode the COMMAND field of the data frame. If the decoded command implies taking some action, the LiFi AP (1) takes it accordingly (e.g., adjusting the dimming level). After command executions, the LiFi AP (1) initiates the direct RF to OWC conversion technique.

The reference signs of the workflow (100) according to Figure 9 are listed below:

- 110: Checking whether downlink transmission interval has started or not.
- 120: Idle state.
- 130: Checking whether RF preamble is detected or not.
- 140: Adjusting RF demodulation parameters according to the RF preamble detected in step 130.
- 150: Decoding the command field.
- 160: Verifying whether the command field needs to be executed.
- 160.1: Executing the command field.
- 170: Initiating the direct RF to OWC conversion until the end of the current downlink transmission interval (time slot).

**Claims**

1. A LiFi access point (1) for sending data to at least one LiFi-enabled Internet of Things, IoT, device (6); the LiFi access point (1) comprising an RF-based wireless unit (1.1), a LiFi unit (1.3) and a control unit (1.2);

   • the RF-based wireless unit (1.1) being configured to receive at least one RF signal with data from a node (5); wherein the RF-based wireless unit (1.1) is also configured to convert said at least one RF signal into a baseband signal;
   • the LiFi unit (1.3) comprising at least one light-emitting diode (1.3.1) configured to emit light, and a driver circuit (1.3.2) configured to adapt the intensity of the light emitted by the at least one light-emitting diode (1.3.1);
   • the control unit (1.2) being communicably coupled with the RF-based wireless unit (1.1) and with the LiFi unit (1.3), the control unit (1.2) comprising a signal demodulator (1.2.1) and a first conversion module (1.2.2);

   wherein the control unit (1.2) is configured for:

   - receiving, from the RF-based wireless unit (1.1), the baseband signal;
   - demodulating, by the signal demodulator (1.2.1), the baseband signal to obtain a demodulated signal;

- converting, by the first conversion module (1.2.2) and using a modulation scheme, the demodulated signal into an intensity-modulated digital signal; and
- sending, by the first conversion module (1.2.2), the intensity-modulated digital signal to the driver circuit (1.3.2);

wherein the LiFi unit (1.3) is configured for:

- adapting, by the driver circuit (1.3.2), the intensity-modulated digital signal to an operating range of the at least one light-emitting diode (1.3.1), to obtain an intensity-modulated optical signal;
- transmitting, by the light-emitting diode (1.3.1), the intensity-modulated optical signal to the at least one LiFi-enabled IoT device (6).

2. The LiFi access point (1) according to the previous claim, wherein the at least one RF signal that the RF-based wireless unit (1.1) is configured to receive comprises:

   • an RF preamble;
   • a command field preceded by the RF preamble; the command field comprising at least one action to be performed by the LiFi access point (1);
   • a LiFi preamble; and
   • a LiFi data field preceded by the LiFi preamble; the LiFi data field comprising data to be transmitted from the LiFi unit (1.3) to the at least one LiFi-enabled IoT device (6);
   wherein the RF-based wireless unit (1.1) is further configured to adjust one or more demodulation parameters according to the RF preamble of the at least one RF signal; and
   wherein the signal demodulator (1.2.1) is configured to perform the following steps according to the one or more demodulation parameters:

   - decoding the command field of the received RF signal;
   - checking whether the at least one action of the command field must be executed or not;
   - decoding the LiFi preamble and the LiFi data field to obtain the demodulated signal;
   - sending the demodulated signal to the first conversion module (1.2.2).

3. The LiFi access point (1) according to any of the previous claims, wherein the signal demodulator (1.2.1) is an Amplitude-Shift Keying, ASK, demodulator or a Frequency-Shift Keying, FSK, demodulator configured to adjust a demodulation threshold dynamically according to the RF preamble.

4. A LiFi communication network (4) comprising:

   • at least one LiFi access point (1) according to any of the previous claims;
   • a node (5);
   wherein the node (5) is configured to be communicably coupled with the RF-based wireless unit (1.1); and
   wherein the node (5) is configured to allocate one or more frequency resource blocks to the at least one LiFi access point (1).

5. The LiFi communication network (4) according to the previous claim, wherein:

   - the node (5) is configured to allocate each of the at least one LiFi access points (1) with a specific frequency resource block for the reception and transmission of signals, each frequency resource block being defined by a carrier frequency and a channel bandwidth; and
   - the node (5) is configured to allocate each of the at least one LiFi access points (1) with its specific frequency resource block following an Orthogonal Frequency Division Multiplexing approach or an Orthogonal Frequency Division Multiple Access approach.

6. The LiFi communication network (4) according to any of the previous claims 4-5, wherein the node (5) comprises a second conversion module configured to use only specific MAC frames in order to control the amplitude of each subcarrier of the RF signal.

7. The LiFi communication network (4) according to claim 4, wherein the LiFi communication network (4) comprises at least two LiFi access points (1);

wherein the LiFi communication network (4) further comprises a medium access control module communicably coupled with the at least two LiFi access points (1); and wherein:

- the medium access control module is configured to allocate transmission time slots for the LiFi access points (1) that are active;
- the LiFi communication network (4) is configured to serve, at each transmission time slot, a number of LiFi access points (1) equal to the number of available frequency resource blocks provided by the node (5); and

during the transmission time slots, the active LiFi access points (1) are allocated by the medium access control module with a frequency resource block to send the data to the at least one LiFi-enabled IoT device (6).

8. The LiFi communication network (4) according to any of claims 4-7, wherein the node (5) is configured to:

- encode data to a set of frequency resource blocks in the frequency domain by Orthogonal Frequency-Division Multiplexing;
- modulate the set of frequency resource blocks using an N-Quadrature Amplitude Modulation, N-QAM, to obtain N-QAM symbols; where $N = 2^x$, and wherein x is a number of bits per symbol and N is a modulation order, the modulation order being the number of possible symbols to be transmitted by the node (5);
- select a subset of the N-QAM symbols;
- map the subset of N-QAM symbols to Amplitude-Shift Keying modulation, M-ASK, obtaining ASK symbols, or to Frequency-Shift Keying Modulation, M-FSK, obtaining FSK symbols;
- transmit the ASK or FSK symbols to the LiFi access point (1); and

wherein the signal demodulator (1.2.1) of each LiFi access point (1) is further configured to demodulate the ASK or FSK symbols and the first conversion module (1.2.2) of each LiFi access point (1) is further configured to convert the demodulated ASK or FSK symbols into an intensity-modulated optical signal following a digital modulation scheme, such as an OOK scheme.

9. The LiFi communication network (4) according to any of claims 4-8, wherein the node (5) is based on RF Orthogonal Frequency Division Multiplexing; and wherein the node (5) is preferably one of the following: a WiFi access point, a 4G base station, or a 5G base station.

10. The LiFi communication network (4) according to any of claims 4-9, wherein the RF-based wireless unit (1.1) of the at least one LiFi access point (1) is further configured to listen to at least a specific frequency resource block and periodically detect changes in the power at such frequency resource block of the RF signal received from the node (5).

11. A method for sending data to at least one LiFi-enabled IoT device (6), the method being carried out by the LiFi access point (1) according to any of the previous claims 1-3 or by the LiFi communication network (4) of any of claims 4-10, wherein the method comprises the following steps:

a) receiving, by the RF-based wireless unit (1.1), at least one RF signal from a node (5) within at least one frequency resource block; and converting, by the RF-based wireless unit (1.1), said at least one RF signal into a baseband signal;
b) demodulating, by the signal demodulator (1.2.1), the baseband signal to obtain a demodulated signal;
c) converting, by the first conversion module (1.2.2) and using a modulation scheme, the at least one demodulated signal into an intensity-modulated digital signal;
d) sending, by the first conversion module (1.2.2), the intensity-modulated digital signal to the driver circuit (1.3.2);
e) adapting, by the driver circuit (1.3.2), the intensity-modulated digital signal to an operating range of the light-emitting diode (1.3.1), to obtain an intensity-modulated optical signal;
f) transmitting, by the at least one LED (1.3.1), the intensity-modulated optical signal to the at least one LiFi-enabled IoT device (6).

12. The method according to the previous claim, wherein the at least one RF signal comprises:

• an RF preamble;
• a command field preceded by the RF preamble; the command field comprising at least one action to be performed by the LiFi access point (1);
• a LiFi preamble; and

• a LiFi data field preceded by the LiFi preamble; the LiFi data field comprising data to be transmitted from the LiFi unit (1.3) to the at least one LiFi-enabled IoT device (6);

wherein step a) comprises adjusting one or more demodulation parameters according to the RF preamble of the RF signal;

wherein step b) is performed according to the one or more demodulation parameters to obtain a demodulated signal; and said step b) comprises:

> • decoding the command field of the received RF signal;
> • checking whether the at least one action of the command field must be executed or not;
> • decoding the LiFi preamble and the LiFi data field to obtain the demodulated signal; and
> • sending the demodulated signal to the first conversion module (1.2.2);

wherein if it is found that the at least one action of the command field must be executed, said at least one action is performed by the RF-based wireless unit (1.1), and/or the control unit (1.2), and/or the LiFi unit (1.3).

13. The method according to any of the previous claims 11-12, said method being carried out by the LiFi communication network (4) of any of claims 4-10, and wherein the method comprises, prior to steps a) to f), allocating by the node (5), one or more frequency resource blocks to the at least one LiFi access point (1).

14. The method according to the previous claim, further comprising the following steps performed by the node (5):

> • encoding data to a set of frequency resource blocks in the frequency domain by Orthogonal Frequency-Division Multiplexing;
> • modulating the set of frequency resource blocks using an N Quadrature Amplitude Modulation, N-QAM, to obtain N-QAM symbols; where $N = 2^x$, and wherein x is a number of bits per symbol and N is a modulation order, the modulation order being the number of possible symbols to be transmitted;
> • selecting a subset of the N-QAM symbols;
> • mapping the subset of N-QAM symbols to Amplitude-Shift Keying modulation, M-ASK, or Frequency-Shift Keying Modulation, M-FSK, thereby obtaining ASK or FSK symbols; and
> • transmitting the ASK or FSK symbols to the at least one LiFi access point (1).

15. The method according to the previous claim, wherein:

> • step b) comprises demodulating the ASK or FSK symbols; and
> • step c) comprises converting the demodulated ASK or FSK symbols into the intensity-modulated digital signal following a digital modulation scheme, such as an OOK scheme.

**FIG. 1A**

**FIG. 1B**

**FIG. 1C**

**FIG. 1D**

**FIG. 2A**

**FIG. 2B**

**FIG. 3A**

**FIG. 3B**

FIG. 3C

FIG. 3D

FIG. 4

FIG.5

**FIG. 6**

**FIG. 7**

**FIG. 8**

FIG. 9

Europäisches Patentamt

European Patent Office

Office européen des brevets

# EUROPEAN SEARCH REPORT

Application Number

**EP 23 38 3009**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETKOVIC MILICA ET AL: "Two-Tier Multi-Rate Slotted ALOHA for OWC/RF-Based IoT Networks", IEEE COMMUNICATIONS LETTERS, IEEE SERVICE CENTER, PISCATAWAY, NJ, US, vol. 27, no. 4, 27 February 2023 (2023-02-27), pages 1190-1194, XP011939244, ISSN: 1089-7798, DOI: 10.1109/LCOMM.2023.3250028 [retrieved on 2023-02-27] * Sections I, II and III.C; figure 1 * ----- | 1-15 | INV. H04B10/116 H04B10/114 |
| X | PETKOVIC MILICA I ET AL: "Mixed RF-VLC Relaying Systems for Interference-Sensitive Mobile Applications", IEEE TRANSACTIONS ON VEHICULAR TECHNOLOGY, IEEE, USA, vol. 69, no. 10, 8 July 2020 (2020-07-08), pages 11099-11111, XP011816514, ISSN: 0018-9545, DOI: 10.1109/TVT.2020.3007676 [retrieved on 2020-10-23] * Sections I.B and III.A and III.B; figures 1,2 * ----- | 1-15 | TECHNICAL FIELDS SEARCHED (IPC) H04B |
| X | WO 2023/137683 A1 (QUALCOMM INC [US]; WEI CHAO [CN]; ZHANG DANLU [US]; XU HAO [CN]) 27 July 2023 (2023-07-27) * paragraph [0057] – paragraph [0061]; figure 2 * * paragraph [0088] – paragraph [0103] * ----- -/-- | 1-15 | |

The present search report has been drawn up for all claims

| Place of search | Date of completion of the search | Examiner |
|---|---|---|
| Munich | 20 February 2024 | Gäde, Sebastian |

EPO FORM 1503 03.82 (P04C01)

Europäisches
Patentamt

European
Patent Office

Office européen
des brevets

# EUROPEAN SEARCH REPORT

Application Number

EP 23 38 3009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MILICA I PETKOVIC ET AL: "Mixed RF-VLC Relaying System with Radio-Access Diversity", ARXIV.ORG, CORNELL UNIVERSITY LIBRARY, 201 OLIN LIBRARY CORNELL UNIVERSITY ITHACA, NY 14853, 22 September 2022 (2022-09-22), XP091325955, DOI: 10.1109/WOCC.2019.8770633 * Sections II and III; figure 1 * ----- | 1-15 | |
| A | ABDERRAHMEN TRICHILI ET AL: "Retrofitting FSO Systems in Existing RF Infrastructure: A Non-Zero Sum Game Technology", ARXIV.ORG, CORNELL UNIVERSITY LIBRARY, 201 OLIN LIBRARY CORNELL UNIVERSITY ITHACA, NY 14853, 16 May 2021 (2021-05-16), XP081964416, * Section III; figure 4 * ----- | 1-15 | TECHNICAL FIELDS SEARCHED (IPC) |

The present search report has been drawn up for all claims

| Place of search | Date of completion of the search | Examiner |
|---|---|---|
| Munich | 20 February 2024 | Gäde, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................
& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

**EP 23 38 3009**

This annex lists the patent family members relating to the patent documents cited in the above-mentioned European search report.
The members are as contained in the European Patent Office EDP file on
The European Patent Office is in no way liable for these particulars which are merely given for the purpose of information.

**20-02-2024**

| Patent document cited in search report | Publication date | Patent family member(s) | Publication date |
|---|---|---|---|
| WO 2023137683 A1 | 27-07-2023 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SONG et al.** An indoor broadband broadcasting system based on PLC and VLC. *IEEE Transactions on Broadcasting*, 2015, vol. 61 (2), 299-308
- **ZHONG et al.** Seamless integration of indoor VLC with WDM-PON based on hierarchically modulated constant envelope OFDM. *17th International Conference on Transparent Optical Networks (ICTON)*, 2015, 1-4
- **KAZEMI et al.** A wireless backhaul solution using visible light communication for indoor Li-Fi attocell networks. *IEEE International Conference on Communications*, 2017, 1-7
- **KAZEMI et al.** A wireless optical backhaul solution for optical attocell networks. *IEEE Transactions on Wireless Communications*, 2019, vol. 18 (2), 807-823